# EUROPÄISCHE PATENTSCHRIFT

(11) **EP 3 963 367 B1**
(45) Veröffentlichungstag und Bekanntmachung des Hinweises auf die Patenterteilung: **19.11.2025**
(21) Anmeldenummer: 20731812.2
(22) Anmeldetag: 02.06.2020
(51) Int. Cl.: G01S 15/931, G01S 15/89, G01S 15/86, B62D 15/02

(54) **VERFAHREN UND VORRICHTUNG ZUM UNTERSTÜTZEN BEI EINEM AUSPARKVORGANG EINES KRAFTFAHRZEUGES AUS EINER QUERPARKLÜCKE**
METHOD AND DEVICE FOR PROVIDING ASSISTANCE TO A MOTOR VEHICLE DURING A PROCESS OF EXITING A LATERAL PARKING SPACE
PROCÉDÉ ET DISPOSITIF D'ASSISTANCE LORS D'UN PROCESSUS DE SORTIE DE STATIONNEMENT D'UN VÉHICULE AUTOMOBILE D'UN EMPLACEMENT DE STATIONNEMENT TRANSVERSAL

(30) Priorität: 21.06.2019 DE 102019209049
(43) Veröffentlichungstag der Anmeldung: 09.03.2022
(73) Patentinhaber: VOLKSWAGEN AKTIENGESELLSCHAFT, 38440 Wolfsburg (DE)
(72) Erfinder: HÜGER, Philipp, 38471 Rühen (DE); GÖRICKE, Bastian, 38446 Wolfsburg (DE); JÖRDENS, Christian, 38126 Braunschweig (DE)
(86) Internationale Anmeldenummer: PCT/EP2020/065170
(87) Internationale Veröffentlichungsnummer: WO 2020/254098

(56) Entgegenhaltungen:
- CN-A- 108 528 441
- DE-A1- 102009 028 760
- DE-A1- 102011 080 148
- DE-A1- 102013 114 563
- DE-A1- 102016 121 474
- JP-A- 2011 016 395

## Beschreibung

Die Erfindung betrifft ein Verfahren und eine Vorrichtung zum Unterstützen bei einem Ausparkvorgang eines Kraftfahrzeuges aus einer Querparklücke.

Querparklücken sind Parklücken, bei denen das geparkte Kraftfahrzeug mit seiner Fahrzeuglängsachse senkrecht zur Fahrbahn steht. Das Ausparken aus Querparklücken kann eine anspruchsvolle Fahraufgabe darstellen, insbesondere in Situationen mit enger Fahrgassenbreite ist ein Ausparken mit einer optimalen Trajektorie erforderlich. Es gibt derzeit Parksysteme mit einem Ausparkassistenten, der sich nach der Aktivierung aus der Parklücke heraustastet, da dieser nur die direkt mit Sensoren messbaren Abstände berücksichtigt. Dies führt dazu, dass der Assistent nicht die optimale Trajektorie wählt und ggf. mehrere Manövrierzüge erforderlich sind, um sich in den Verkehr einzufädeln, sodass das Kraftfahrzeug entlang der Fahrbahn fahren kann.

Aus der DE 10 2013 015 349 A1 ist ein Verfahren zum Betrieb eines Fahrzeugs, insbesondere zum Anfahren eines Parkplatzes in einer nicht einsehbaren Parkzone durch das Fahrzeug bekannt, bei welchem Umgebungsdaten des Fahrzeugs erfasst werden, wobei beim Anfahren eines Parkplatzes in der Parkzone identifiziert wird, ob dieser ein Heim-Parkplatz oder die Parkzone eine Heim-Parkzone ist. Bei einem identifizierten Heim-Parkplatz oder Heim-Parkzone und Annäherung des Fahrzeugs an den identifizierten Heim-Parkplatz bzw. an die identifizierte Heim-Parkzone werden erfasste Umgebungsdaten oder Fahrdaten gespeichert oder aktualisiert. Dabei ist auch eine Ausparktrajektorie beschrieben.

Aus der DE 10 2014 220 263 A1 ist ein Verfahren zum Unterstützen eines Einparkvorganges eines Kraftfahrzeuges bekannt, wobei das Verfahren folgende Schritte aufweist:
- Erstmaliges Bewegen des Kraftfahrzeuges von einer Startposition in eine Parkposition,
- während des erstmaligen Bewegens des Kraftfahrzeuges von der Startposition in die Parkposition stetiges Erfassen von Daten über wenigstens drei Fahrparameter des Kraftfahrzeuges, welche zum Aufzeichnen einer Fahrzeugtrajektorie verfügbar sind,
- Speichern der erfassten Daten über die wenigstens drei Fahrparameter des Kraftfahrzeuges,
- automatisches Bewegen des Kraftfahrzeuges zwischen der Startposition und der Parkposition in Abhängigkeit der gespeicherten erfassten Daten über die wenigstens drei Fahrparameter als Reaktion auf das fahrzeugseitige Empfangen eines Aktivierungssignals.

Dabei sind die drei Fahrparameter eine aktuelle Fahrzeugbeschleunigung, ein aktueller Lenkwinkel und eine aktuell eingelegte Fahrstufe. Dabei wird beschrieben, dass das Fahrzeug eingeparkt wird und anschließend ausgeparkt wird, sodass die Fahrzeuginsassen aussteigen können, sodass dann anschließend das Fahrzeug endgültig eingeparkt wird. Dabei wird auch erwähnt, dass das Fahrzeug ausgeparkt wird, sodass dann die Fahrzeuginsassen später wieder ungehindert einsteigen können.

Aus der DE 10 2009 028 760 A1 ist ein gattungsgemäßes Verfahren zum Unterstützen bei einem Ausparkvorgang eines Kraftfahrzeugs aus einer Querparklücke bekannt.

Aus der DE 10 2011 080 148 A1 ist ein Verfahren zur Unterstützung eines Fahrers eines Kraftfahrzeugs bei einem Ausparkmanöver aus einer Querparklücke in Rückwärtsrichtung bekannt, wobei seitliche Begrenzungslinien bestimmt werden. Dabei wird in einer Ausführungsform beschrieben, dass zur Bestimmung der seitlichen Begrenzungslinien seitliche Objektgrenzen von dem Kraftfahrzeug benachbarten Objekten genutzt werden, die beim Einparken des Kraftfahrzeugs in die Querparklücke erfasst und in einem nichtflüchtigen Speicher gespeichert worden sind.

Aus der DE 10 2012 008 858 A1 ist ein Verfahren zur Durchführung eines autonomen Parkvorgangs eines Kraftfahrzeugs bekannt, wobei zwischen einem sich außerhalb des Kraftfahrzeugs befindlichen Bediener und dem Kraftfahrzeug eine Kommunikationsverbindung besteht, durch welche zumindest ein Befehl zum Aktivieren des autonomen Parkvorgangs des Kraftfahrzeugs übertragbar ist. Vor Beginn des autonomen Parkvorgangs des Kraftfahrzeugs wird die Zielposition und/oder die zuletzt gefahrene Trajektorie des Kraftfahrzeugs gespeichert, wobei diese Daten zur Durchführung des autonomen Parkvorgangs genutzt werden.

Aus der DE 10 2018 212 975 A1 ist eine Einparkhilfevorrichtung zum Unterstützen des Einparkens eines Fahrzeugs bekannt.

Aus der DE 10 2016 121 474 A1, der CN 108 528 441 A oder der DE 10 2013 114 563 A1 sind jeweils Verfahren zum Unterstützen eines Ausparkvorganges bekannt, wobei neben Abstandssensoren mindestens eine Kamera verwendet wird.

Aus der JP 2011 016395 A ist ein Verfahren zum Unterstützen des Ausparkens aus einer Parallelparklücke bekannt, wobei mittels einer rückwärtigen Kamera die Fahrzeugmarke eines rückseitig parkenden Kraftfahrzeugs erfasst wird.

Der Erfindung liegt das technische Problem zugrunde, ein Verfahren zum Unterstützen bei einem Ausparkvorgang eines Kraftfahrzeuges aus einer Querparklücke zu verbessern sowie eine geeignete Vorrichtung zu schaffen.

Die Lösung des technischen Problems ergibt sich durch ein Verfahren mit den Merkmalen des Anspruchs 1 sowie eine Vorrichtung mit den Merkmalen des Anspruchs 7. Weitere vorteilhafte Ausgestaltungen der Erfindung ergeben sich aus den Unteransprüchen.

Das Verfahren zum Unterstützen bei einem Ausparkvorgang eines Kraftfahrzeuges aus einer Querparklücke umfasst die Verfahrensschritte, dass zunächst das Kraftfahrzeug in die Querparklücke eingeparkt wird, wobei während des Einparkvorganges mittels mindestens einer Umfeldsensorik Abstandswerte von benachbarten Fahrzeugen erfasst werden. Diese erfassten Abstandswerte während des Einparkvorganges werden in einer Umfeldkarte abgespeichert bzw. die Umfeldkarte wird mittels der Abstandswerte aufgebaut. Vor Beginn eines Ausparkvorganges werden die aktuellen Abstandswerte zu den benachbarten Kraftfahrzeugen erfasst, wobei vorzugsweise ein längerer Zeitraum zwischen Ein- und Ausparkvorgang liegt und das Kraftfahrzeug ausgeschaltet wurde. Die aktuell erfassten Abstandswerte werden mit den zuletzt abgespeicherten Abstandswerten während des Einparkvorganges verglichen. Sind die aktuellen Abstandswerte und die zuletzt abgespeicherten Abstandswerte gleich, so wird eine Ausparktrajektorie mittels der Umfeldkarte bereitgestellt, die ein optimales Ausparken ermöglicht. Sind die Abstandswerte hingegen nicht gleich, so ist die abgespeicherte Umfeldkarte nicht mehr gültig und das Kraftfahrzeug muss wie herkömmlich sich aus der Querparklücke heraustasten. Der Grundgedanke der Erfindung ist, dass während des Einparkvorganges die Umfeldsensorik alle relevanten Abstandswerte der benachbarten Kraftfahrzeuge erfassen kann, die im eingeparkten Zustand dann nicht mehr direkt erfassbar sind. Anhand des Vergleichs der Abstandswerte kann dann die Gültigkeit der Umfeldkarte überprüft werden und bei positiver Überprüfung auf diese alten Daten zurückgegriffen werden, was den Ausparkvorgang in vielen Fällen erleichtert.

Weiter wird neben den Abständen mindestens ein weiteres Merkmal der benachbarten Kraftfahrzeuge erfasst und abgespeichert, wobei das mindestens eine weitere Merkmal zusätzlich vor Beginn des Ausparkvorganges mit einem aktuell erfassten Merkmal verglichen wird, wobei die Ausparktrajektorie nur bereitgestellt wird, wenn die Abstände gleich sind und das mindestens eine weitere Merkmal gleich ist.

Das mindestens eine weitere Merkmal ist mindestens die Farbe. Dabei wird das mindestens eine weitere Merkmal mittels mindestens einer Kamera erfasst. Zusätzlich kann auch noch eine Kontur der benachbarten Kraftfahrzeuge erfasst werden.

In einer Ausführungsform wird die bereitgestellte Ausparktrajektorie vollautomatisiert abgefahren. Es ist aber auch möglich, diese dem Kraftfahrzeugführer nur anzuzeigen bzw. nur Lenkempfehlungen oder Lenkunterstützungen anzubieten.

In einer weiteren Ausführungsform erfolgt auch der Einparkvorgang vollautomatisiert.

In einer weiteren Ausführungsform wird von mindestens einem Kraftfahrzeug die zur Straße zeigende Kontur erfasst, sodass die Ausparktrajektorie weiter optimiert werden kann.

In einer weiteren Ausführungsform werden die Abstandwerte mittels Ultraschall-Sensoren erfasst.

Hinsichtlich der Ausgestaltung der Vorrichtung kann vollinhaltlich auf die vorangegangenen Ausführungen Bezug genommen werden.

Die Erfindung wird nachfolgend anhand eines bevorzugten Ausführungsbeispiels näher erläutert. Die Fig. zeigen:
- Fig. 1: eine schematische Verkehrssituation vor dem Einparken in eine Querparklücke,
- Fig. 2: eine schematische Verkehrssituation während des Einparkens in eine Querparklücke,
- Fig. 3: eine schematische Verkehrssituation nach Ende des Einparkvorganges,
- Fig. 4: eine schematische Verkehrssituation nach dem Ende des Einparkvorganges vor dem Abstellen des Kraftfahrzeuges,
- Fig. 5: eine schematische Verkehrssituation nach dem Einschalten des Kraftfahrzeuges vor Beginn des Ausparkvorganges,
- Fig. 6: eine schematische Verkehrssituation beim Ausparken aus der Querparklücke,
- Fig. 7: eine schematische alternative Verkehrssituation nach dem Einschalten vor Beginn des Ausparkvorganges und
- Fig. 8: ein schematisches Blockschaltbild einer Vorrichtung zum Unterstützen bei einem Ausparkvorgang eines Kraftfahrzeuges aus einer Querparklücke.

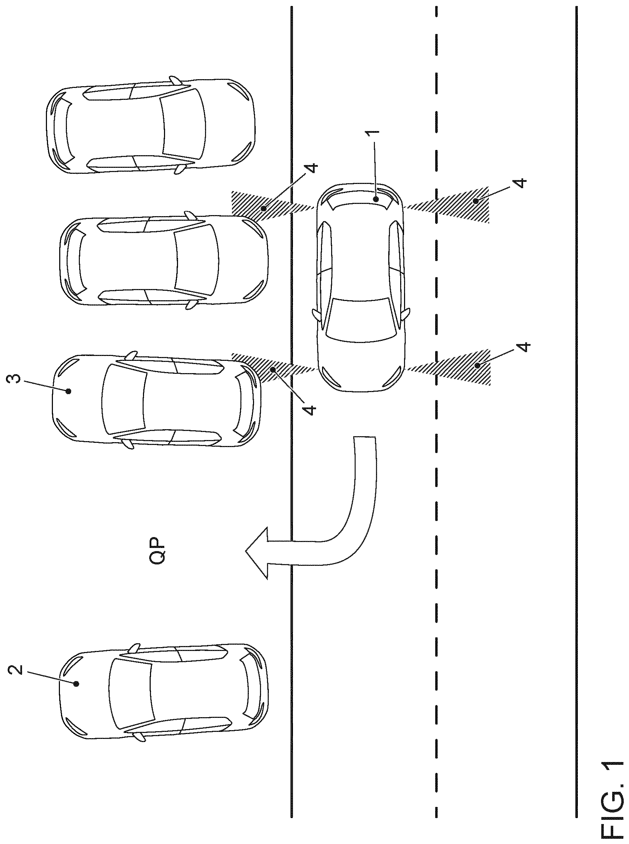

In der Fig. 1 ist schematisch eine Verkehrssituation dargestellt, bei der ein Kraftfahrzeug 1 in eine Querparklücke QP einparken möchte. Dabei wird die Querparklücke QP von zwei benachbarten Kraftfahrzeugen 2, 3 begrenzt. Weiter sind die Abtastbereiche 4 von vier seitlich verbauten Ultraschall-Sensoren dargestellt. Wie ersichtlich, ist der erfassbare Bereich der Ultraschall-Sensoren zu einem Zeitpunkt begrenzt.

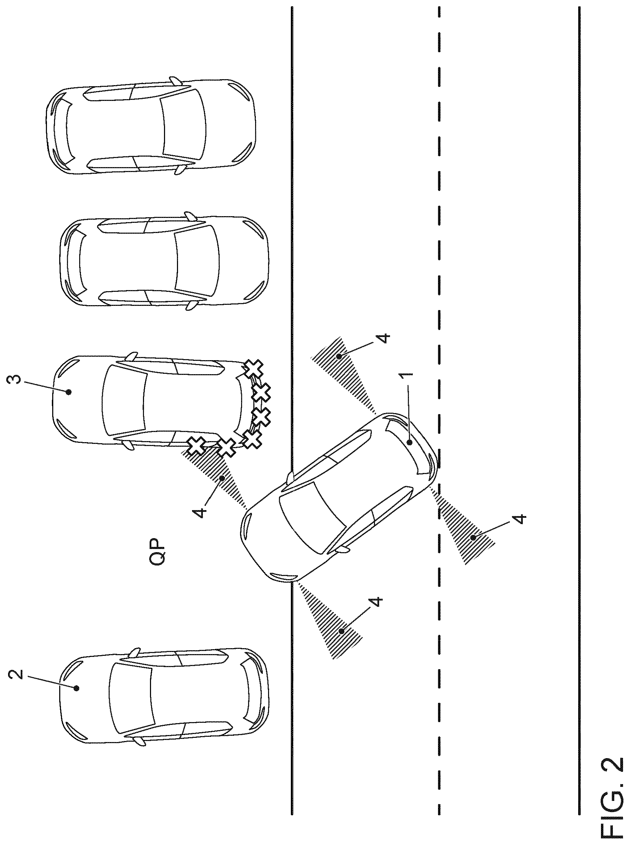

Parkt nun das Kraftfahrzeug 1 in die Querparklücke QP ein, so erfasst die Ultraschall-Sensorik des Kraftfahrzeuges 1 kontinuierlich Abstandswerte von dem Kraftfahrzeug 3, sodass dessen Kontur im zur Straße zugewandten Bereich erfasst wird. Dies ist in Fig. 2 durch die Kreuze symbolisiert.

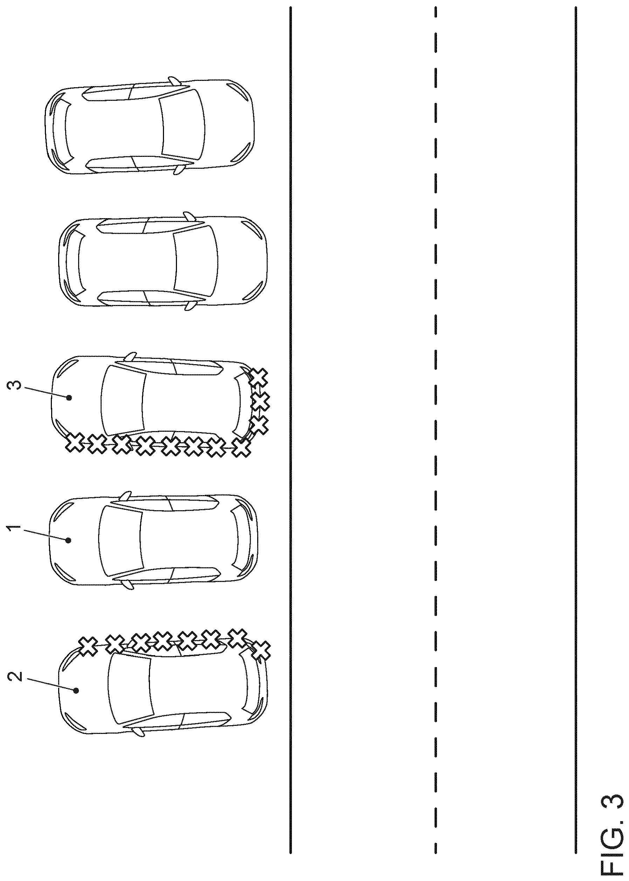

Ist der Einparkvorgang dann abgeschlossen, so hat das Kraftfahrzeug 1 auch die seitlichen Abstandswerte der benachbarten Kraftfahrzeuge 2, 3 vermessen, was wieder durch die Kreuze in Fig. 3 symbolisiert ist. All diese Abstandswerte werden in eine Umfeldkarte eingetragen bzw. diese wird mit Hilfe der Abstandswerte aufgebaut. Zusätzlich können noch weitere Merkmale der Kraftfahrzeuge 2, 3 erfasst und abgespeichert werden.

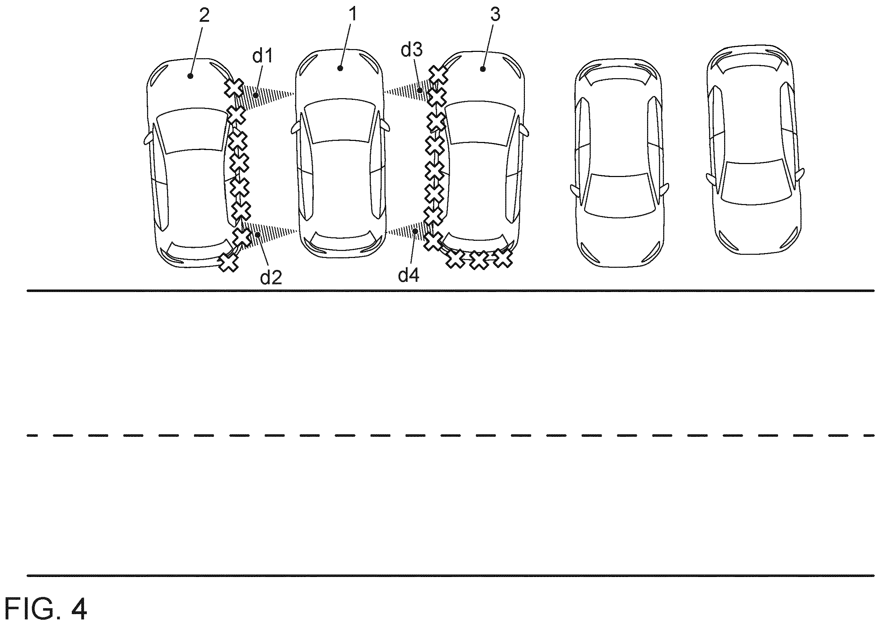

In der Fig. 4 ist nun das Kraftfahrzeug 1 vollständig eingeparkt und erfasst vor dem Abstellen des Kraftfahrzeuges 1 noch die nur direkt messbaren Abstandswerte d1 - d4. Anschließend wird das Kraftfahrzeug 1 abgestellt und die Sensorik ausgeschaltet.

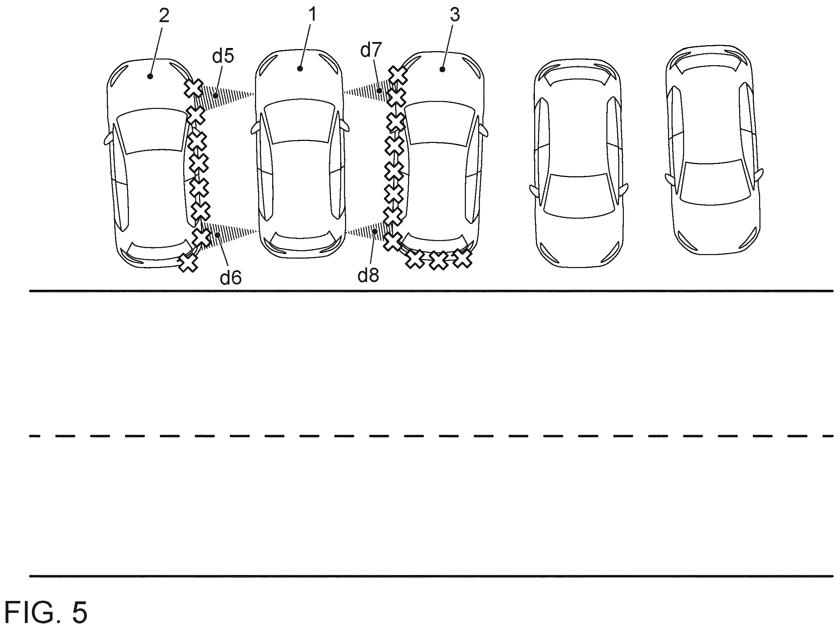

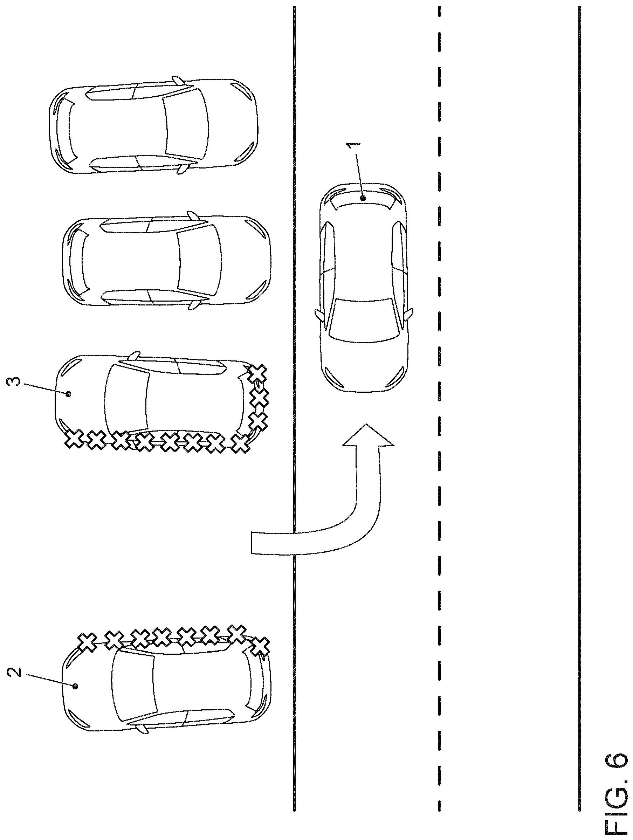

In der Fig. 5 ist die Situation dargestellt, wo das Kraftfahrzeug 1 wieder eingeschaltet wird und aus der Querparklücke QP ausgeparkt werden soll. Dann werden zunächst die aktuellen Abstandswerte d5- d8 gemessen und mit den vor dem Abstellen abgespeicherten Abstandswerten d1 - d4 verglichen. Wurden weitere Merkmale abgespeichert, werden auch diese aktuell erfasst und verglichen. Sind die Abstandswerte gleich, also d1 = d5, d2 = d6, d3 = d7 und d4 = d8 wird davon ausgegangen, dass sich nichts verändert hat und die Umfeldkarte noch gültig ist. Somit kennt das Kraftfahrzeug 1 die genaue Ausdehnung der relevanten Teile der Kraftfahrzeuge 2, 3 und kann eine optimale Trajektorie bereitstellen, was schematisch in Fig. 6 angedeutet ist.

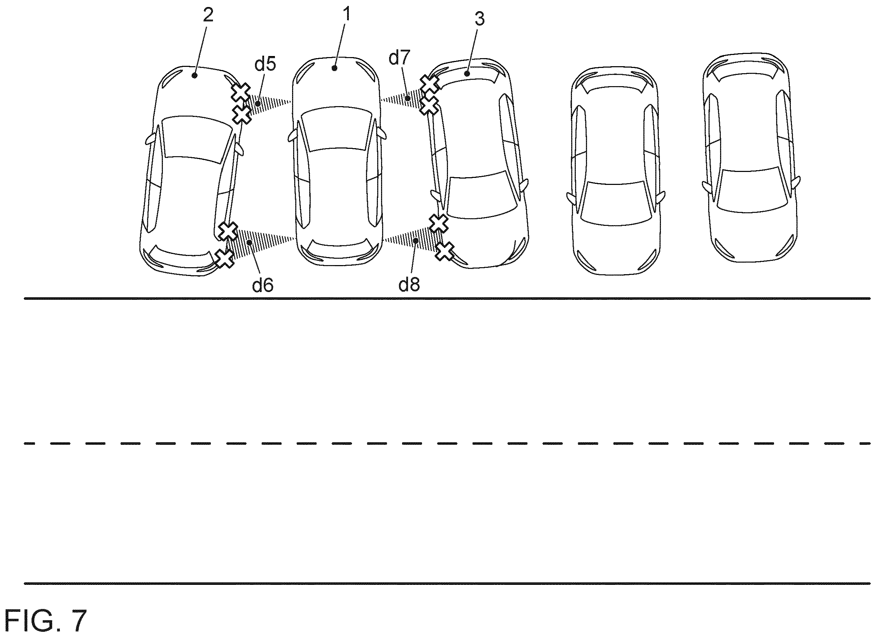

In der Fig. 7 ist nun dargestellt, dass die beiden Kraftfahrzeuge 2, 3 nicht mehr die gleichen sind wie beim Abstellen gemäß Fig. 4. Entsprechend sind die aktuell gemessenen Abstandswerte d5 - d8 verschieden zu den abgespeicherten Abstandswerten d1 - d4 und die Umfeldkarte ist nicht mehr gültig.

Ein Spezialfall ist, dass ein benachbartes Kraftfahrzeug 2, 3 fehlt. In diesem Fall kann dann trotzdem eine optimale Trajektorie angeboten werden, obwohl die Abstände nicht gleich sind. Allerdings ist das nicht zwingend, da Fälle denkbar sind, wo Objekte auf dem benachbarten Parkplatz abgestellt sind, die bei der Trajektorie im Wege sind, aber nicht von der Sensorik erfassbar sind.

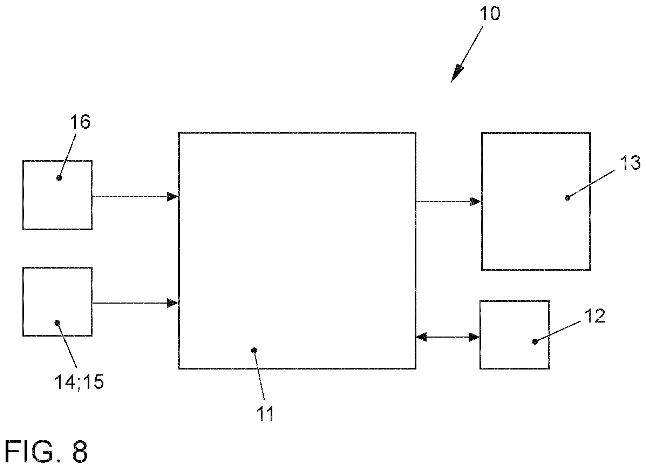

In der Fig. 8 ist ein schematisches Blockschaltbild einer Vorrichtung 10 zum Unterstützen bei einem Ausparkvorgang eines Kraftfahrzeuges aus einer Querparklücke dargestellt. Die Vorrichtung 10 weist ein Steuergerät 11, einen Speicher 12 sowie eine Umfeldkarte 13 auf. Weiter weist die Vorrichtung 10 eine Umfeldsensorik 14 auf, die mehrere Ultraschall-Sensoren 15 aufweist. Schließlich weist die Vorrichtung 10 mindestens eine Kamera 16 auf.

Die Vorrichtung 10 erhält während eines Einparkvorganges kontinuierlich Daten von den Ultraschall-Sensoren 15 und speichert diese im Speicher 12 ab. Mittels der eigenen Positionsbestimmung, Lenkbewegung sowie den abgespeicherten Abstandswerten baut das Steuergerät 11 eine Umfeldkarte 13 auf und speichert diese ab. Des Weiteren ermittelt die mindestens eine Kamera 16 mindestens ein weiteres Merkmal der benachbarten Kraftfahrzeuge 2, 3 und speichert diese Merkmale in der Umfeldkarte 13 ab. Vor Beginn des Ausparkvorganges erhält die Vorrichtung 10 wieder Abstandswerte d5 - d8 von den Ultraschall-Sensoren 15 sowie die aktuellen erfassten Merkmale der benachbarten Kraftfahrzeuge 2, 3. Das Steuergerät 11 vergleicht dann diese aktuellen Werte mit den abgespeicherten Werten und stellt eine Ausparktrajektorie zur Verfügung, falls die Werte gleich sind, wobei die Ausparktrajektorie mittels der Umfeldkarte 13 berechnet wird.

### Bezugszeichenliste

- 1): Kraftfahrzeug
- 2, 3): benachbarte Kraftfahrzeuge
- 4): Abtastbereiche
- 10): Vorrichtung
- 11): Steuergerät
- 12): Speicher
- 13): Umfeldkarte
- 14): Umfeldsensorik
- 15): Ultraschall-Sensoren
- 16): Kamera
- d1 - d4): Abstandswerte
- d5 - d8): Abstandswerte
- QP): Querparklücke

## Patentansprüche

1. Verfahren zum Unterstützen bei einem Ausparkvorgang eines Kraftfahrzeuges (1) aus einer Querparklücke (QP), umfassend die folgenden Verfahrensschritte:
a) Einparken des Kraftfahrzeuges (1) in die Querparklücke (QP),
b) sukzessives Erfassen von Abstandswerten von benachbarten Kraftfahrzeugen (2, 3) während der Einparkvorganges mittels mindestens einer Umfeldsensorik (14),
c) Abspeichern der während des Einparkvorganges ermittelten Abstandswerte in einer Umfeldkarte (13),
d) Erfassen der aktuellen Abstandswerte (d5 - d8) zu den benachbarten Kraftfahrzeugen (2, 3) vor Beginn des Ausparkvorganges,
e) Vergleichen der aktuell erfassten Abstandswerte (d5 - d8) mit den zuletzt abgespeicherten Abstandswerten (d1 - d4) gemäß Verfahrensschritt c) und
f) Bereitstellen einer Ausparktrajektorie mittels der Umfeldkarte (13) aus Verfahrensschritt c), wenn die Abstandswerte (d1 - d4, d5 - d8) aus Verfahrensschritt e) gleich sind,
**dadurch gekennzeichnet, dass**
neben den Abständen mindestens ein weiteres Merkmal der benachbarten Kraftfahrzeuge (2, 3) erfasst und abgespeichert wird, wobei das mindestens eine Merkmal im Verfahrensschritt e) mit einem aktuell erfassten Merkmal verglichen wird, wobei Verfahrensschritt f) nur durchgeführt wird, wenn sowohl die Abstandswerte als auch das weitere Merkmal gleich sind, wobei das mindestens eine weitere Merkmal eine Farbe ist, wobei das mindestens eine weitere Merkmal mittels mindestens einer Kamera (16) erfasst wird.

2. Verfahren nach Anspruch 1, **dadurch gekennzeichnet, dass** zusätzlich als weiteres Merkmal die Kontur der Kraftfahrzeuge (2, 3) erfasst und verglichen wird.

3. Verfahren nach Anspruch 1 oder 2, **dadurch gekennzeichnet, dass** die bereitgestellte Ausparktrajektorie vollautomatisiert abgefahren wird.

4. Verfahren nach einem der vorangegangenen Ansprüche, **dadurch gekennzeichnet, dass** die Einparktrajektorie gemäß Verfahrensschritt a) vollautomatisiert abgefahren wird.

5. Verfahren nach einem der vorangegangenen Ansprüche, **dadurch gekennzeichnet, dass** die zur Straße zeigende Kontur mindestens eines Kraftfahrzeugs (3) erfasst wird.

6. Verfahren nach einem der vorangegangenen Ansprüche, **dadurch gekennzeichnet, dass** die Abstandswerte mittels Ultraschall-Sensoren (15) ermittelt werden.

7. Vorrichtung zum Unterstützen bei einem Ausparkvorgang eines Kraftfahrzeuges (1) aus einer Querparklücke (QP), umfassend mindestens eine Umfeldsensorik (14) und mindestens ein Steuergerät (11) mit einem zugeordneten Speicher (12), wobei die Vorrichtung (10) derart ausgebildet ist, während eines Einparkvorganges sukzessive Abstandswerte von benachbarten Kraftfahrzeugen (2, 3) zu erfassen und in einer Umfeldkarte (13) abzuspeichern, wobei die Vorrichtung (10) weiter derart ausgebildet ist, dass vor Beginn des Ausparkvorganges aktuelle Abstandswerte (d5 - d8) zu den benachbarten Kraftfahrzeugen (2, 3) erfasst und mit den in der Umfeldkarte (13) abgespeicherten Abstandswerten (d1 - d4) verglichen werden, wobei bei Übereinstimmung eine Ausparktrajektorie mittels der Umfeldkarte (13) bereitgestellt wird, **dadurch gekennzeichnet, dass**
die Vorrichtung (10) derart ausgebildet ist, neben den Abständen mindestens ein weiteres Merkmal der benachbarten Kraftfahrzeuge (2, 3) zu erfassen und abzuspeichern, wobei das abgespeicherte Merkmal vor Beginn des Ausparkvorgangs mit aktuellen weiteren Merkmalen verglichen wird, wobei die Ausparktrajektorie nur bereitgestellt wird, wenn die Abstände und das weitere Merkmal übereinstimmen, wobei die Vorrichtung (10) zur Erfassung des mindestens einen weiteren Merkmals eine Kamera (16) aufweist, wobei das mindestens eine weitere Merkmal eine Farbe ist.

8. Vorrichtung nach Anspruch 7, **dadurch gekennzeichnet, dass** zusätzlich als weiteres Merkmal eine Kontur erfasst und verglichen wird.

9. Vorrichtung nach Anspruch 7 oder 8, **dadurch gekennzeichnet, dass** die Vorrichtung derart ausgebildet ist, die Einparktrajektorie und/oder die Ausparktrajektorie vollautomatisiert abzufahren.

10. Vorrichtung nach einem der Ansprüche 7 bis 9, **dadurch gekennzeichnet, dass** die Umfeldsensorik (14) Ultraschall-Sensoren (15) aufweist.

## Claims

1. Method for assisting a motor vehicle (1) in a parking space exit maneuver from a perpendicular parking space (QP), comprising the following method steps:
a) parking the motor vehicle (1) in the perpendicular parking space (QP),
b) successively capturing distance values from neighboring motor vehicles (2, 3) during the parking space entry maneuver using at least one environment sensor system (14),
c) storing the distance values determined during the parking space entry maneuver in an environment map (13),
d) capturing the current distance values (d5 - d8) with respect to the neighboring vehicles (2, 3) before starting the parking space exit maneuver,
e) comparing the current captured distance values (d5 - d8) with the last stored distance values (d1 - d4) according to method step c) and
f) providing a parking space exit trajectory using the environment map (13) from method step c) if the distance values (d1 - d4, d5 - d8) from method step e) are the same,
**characterized in that**
in addition to the distances, at least one further feature of the neighboring motor vehicles (2, 3) is captured and stored, wherein, in method step e), the at least one feature is compared with a current captured feature, wherein method step f) is carried out only if both the distance values and the further feature are the same, wherein the at least one further feature is a color, wherein the at least one further feature is captured using at least one camera (16).

2. Method according to claim 1, **characterized in that,** the contour of the motor vehicles (2, 3) is also captured and compared as a further feature.

3. Method according to claim 1 or 2, **characterized in that** the provided parking space exit trajectory is followed fully automatically.

4. Method according to any of the preceding claims, **characterized in that** the parking space entry trajectory is followed fully automatically according to method step a).

5. Method according to any of the preceding claims, **characterized in that** the contour pointing towards the road of at least one motor vehicle (3) is captured.

6. Method according to any of the preceding claims, **characterized in that** the distance values are determined using ultrasonic sensors (15).

7. Device for assisting a motor vehicle (1) in an exit maneuver from a perpendicular parking space (QP), comprising at least one environment sensor system (14) and at least one control unit (11) having an associated memory (12), wherein the device (10) is designed to capture successive distance values from neighboring motor vehicles (2, 3) during a parking space entry maneuver and store them in an environment map (13), wherein the device (10) is further designed such that, before the start of the parking space exit maneuver, current distance values (d5 - d8) with respect to the neighboring motor vehicles (2, 3) are captured and compared with the distance values (d1 - d4) stored in the environment map (13), wherein, if there is a match, a parking space exit trajectory is provided using the environment map (13), **characterized in that,**
in addition to the distances, the device (10) is designed to capture and store at least one further feature of the neighboring motor vehicles (2, 3), wherein the stored feature is compared with current further features before the start of the parking space exit maneuver, wherein the parking space exit trajectory is provided only if the distances and the further feature match, wherein the device (10) has a camera (16) for capturing the at least one further feature, wherein the at least one further feature is a color.

8. Device according to claim 7, **characterized in that** a contour is also captured and compared as a further feature.

9. Device according to claim 7 or 8, **characterized in that** the device is designed to follow the parking space entry trajectory and/or the parking space exit trajectory fully automatically.

10. Device according to any of claims 7 to 9, **characterized in that** the environment sensor system (14) has ultrasonic sensors (15).

## Revendications

1. Procédé d'assistance lors d'une opération de sortie de stationnement d'un véhicule automobile (1) d'une place de stationnement transversale (QP), comprenant les étapes de procédé suivantes :
a) stationnement du véhicule automobile (1) dans la place de stationnement transversale (QP),
b) acquisition successive de valeurs de distance de véhicules automobiles voisins (2, 3) pendant le processus de stationnement par le biais d'au moins un système de capteurs d'environnement (14),
c) mémorisation des valeurs de distance déterminées pendant le processus de stationnement dans une carte d'environnement (13),
d) acquisition des valeurs de distance actuelles (d5 - d8) par rapport aux véhicules automobiles voisins (2, 3) avant le début du processus de sortie de stationnement,
e) comparaison des valeurs de distance actuelles (d5 - d8) acquises avec les dernières valeurs de distance (d1 - d4) mémorisées selon l'étape de procédé c) et
f) mise à disposition d'une trajectoire de sortie de stationnement par le biais de la carte d'environnement (13) de l'étape de procédé c), lorsque les valeurs de distance (d1 - d4, d5 - d8) de l'étape de procédé e) sont identiques,
**caractérisé en ce que**
outre les distances, au moins une autre caractéristique des véhicules automobiles voisins (2, 3) est acquise et mémorisée, dans lequel l'au moins une caractéristique est comparée dans l'étape de procédé e) à une caractéristique actuelle acquise, dans lequel l'étape de procédé f) n'est réalisée que si aussi bien les valeurs de distance que l'autre caractéristique sont identiques, dans lequel l'au moins une autre caractéristique est une couleur, dans lequel l'au moins une autre caractéristique est acquise par le biais d'au moins une caméra (16).

2. Procédé selon la revendication 1, **caractérisé en ce qu'**en plus, comme autre caractéristique, le contour des véhicules automobiles (2, 3) est acquis et comparé.

3. Procédé selon la revendication 1 ou 2, **caractérisé en ce que** la trajectoire de sortie de stationnement mise à disposition est suivie de manière entièrement automatisée.

4. Procédé selon l'une des revendications précédentes,
**caractérisé en ce que** la trajectoire de stationnement selon l'étape de procédé a) est suivie de manière entièrement automatisée.

5. Procédé selon l'une des revendications précédentes,
**caractérisé en ce que** le contour d'au moins un véhicule automobile (3) faisant face à la route est acquis.

6. Procédé selon l'une des revendications précédentes,
**caractérisé en ce que** les valeurs de distance sont déterminées par le biais de capteurs à ultrasons (15).

7. Dispositif d'assistance lors d'une opération de sortie de stationnement d'un véhicule automobile (1) d'une place de stationnement transversale (QP), comprenant au moins un système de capteurs d'environnement (14) et au moins un appareil de commande (11) comportant une mémoire (12) associée, dans lequel le dispositif (10) est conçu de telle sorte que, pendant une opération de stationnement, il détecte successivement des valeurs de distance de véhicules automobiles voisins (2, 3) et les mémorise dans une carte d'environnement (13), dans lequel le dispositif (10) est en outre conçu de telle sorte qu'avant le début de l'opération de sortie de stationnement, des valeurs de distance actuelles (d5 - d8) par rapport aux véhicules automobiles voisins (2, 3) sont acquises et comparées aux valeurs de distance (d1 - d4) mémorisées dans la carte d'environnement (13), dans lequel une trajectoire de sortie de stationnement est mise à disposition par le biais de la carte d'environnement (13) en cas de concordance,
**caractérisé en ce que**
le dispositif (10) est conçu de telle sorte qu'il détecte et mémorise, outre les distances, au moins une autre caractéristique des véhicules automobiles voisins (2, 3), dans lequel la caractéristique mémorisée est comparée, avant le début de l'opération de sortie de stationnement, à d'autres caractéristiques actuelles, dans lequel la trajectoire de sortie de stationnement n'est mise à disposition que si les distances et l'autre caractéristique concordent, dans lequel le dispositif (10) présente une caméra (16) pour l'acquisition de l'au moins une autre caractéristique, dans lequel l'au moins une autre caractéristique est une couleur.

8. Dispositif selon la revendication 7, **caractérisé en ce qu'un** contour est en outre acquis et comparé en tant qu'autre caractéristique.

9. Dispositif selon la revendication 7 ou 8, **caractérisé en ce que** le dispositif est conçu de telle sorte que la trajectoire d'entrée et/ou la trajectoire de sortie de stationnement sont suivies de manière entièrement automatisée.

10. Dispositif selon l'une des revendications 7 à 9, **caractérisé en ce que** le système de capteurs d'environnement (14) présente des capteurs à ultrasons (15).
